# NEUE EUROPÄISCHE PATENTSCHRIFT

(11) **EP 2 918 157 B2**
(45) Veröffentlichungstag und Bekanntmachung des Hinweises auf die Entscheidung über den Einspruch: **08.04.2020**
(45) Hinweis auf die Patenterteilung: 21.06.2017
(21) Anmeldenummer: 15401006.0
(22) Anmeldetag: 17.02.2015
(51) Int. Cl.: A01B 63/00

(54) **Landwirtschaftliche Arbeitsmaschine mit Teilbreitensteuerung**
Agricultural machine with part width control
Machine agricole dotée d'une commande de section

(30) Priorität: 18.02.2014 DE 102014102040
(43) Veröffentlichungstag der Anmeldung: 16.09.2015
(73) Patentinhaber: Amazonen-Werke H. Dreyer GmbH & Co. KG, 49205 Hasbergen (DE)
(72) Erfinder: Kühn, Christoph, 49824 Ringe (DE)
(74) Vertreter: Grünecker Patent- und Rechtsanwälte PartG mbB

(56) Entgegenhaltungen:
- EP-A1- 0 845 198
- EP-A1- 0 970 595
- EP-A2- 1 183 929
- GB-A- 2 347 368
- GB-A- 2 497 577
- US-A1- 2002 157 841
- US-A1- 2009 164 067
- US-A1- 2011 125 371
- US-B2- 7 395 769
- Sonke Holst: "Die bewährten ISOBUS-Terminals von Müller- Elektronik", Agritechnica, 10 November 2009 (2009-11-10), pages 1-6, XP055474477,
- "AgLeader Technology Produktkatalog", Agritechnica, 14 November 2011 (2011-11-14), pages 1-14, XP055474478,

## Beschreibung

Die vorliegende Erfindung bezieht sich auf eine landwirtschaftliche Arbeitsmaschine, deren Arbeitsgerät ein Gestänge mit mehreren Teilbreiten aufweist und eine entsprechende Steuerung dieser Teilbreiten.

Entsprechende landwirtschaftliche Arbeitsmaschinen mit Steuerungen für die Teilbreiten sind aus dem Stand der Technik bekannt. Dabei werden zumeist Standortbestimmungen wie GPS-Sensoren genutzt, um die Position der gesamten landwirtschaftlichen Arbeitsmaschine und/oder des entsprechenden Arbeitsgeräts zu bestimmen und mit Hilfe dieser Position und beispielsweise einer Karte, auf der geografische Informationen über bereits bearbeitete Flächen hinterlegt sind, die Teilbreiten gegebenenfalls abzuschalten, sofern die Arbeitsmaschine über einen bereits bearbeiteten Bereich fährt oder einzuschalten, sobald sie auf einen bisher unbearbeiteten Bereich fährt.

Da das Arbeitsgerät mit der Arbeitsmaschine jedoch meist über eine Deichsel oder ähnliche Verbindungen verbunden ist, befindet sich das Gestänge üblicherweise nicht direkt hinter dem Zugfahrzeug der landwirtschaftlichen Arbeitsmaschine, so dass der entsprechende Versatz beim Überfahren von bereits bearbeiteten Bereichen eines Feldes schwierig zu berücksichtigen ist.

Ausgehend vom bekannten Stand der Technik ist es Aufgabe der vorliegenden Erfindung, die Steuerung der Teilbreiten eines Arbeitsgeräts einer landwirtschaftlichen Arbeitsmaschine zu verbessern.

Diese Aufgabe wird erfindungsgemäß durch die landwirtschaftliche Arbeitsmaschine nach Anspruch 1 und das Verfahren zum Schalten von Teilbreiten einer landwirtschaftlichen Arbeitsmaschine nach Anspruch 5 gelöst. Vorteilhafte Weiterbildungen der Erfindung sind in den Unteransprüchen erfasst.

Die erfindungsgemäße landwirtschaftliche Arbeitsmaschine ist dadurch gekennzeichnet, dass die Arbeitsmaschine einen Winkelsensor umfasst, der den Winkel zwischen dem Zugfahrzeug und dem Gestänge messen kann und dass die Teilbreiten in Abhängigkeit des gemessenen Winkels unabhängig voneinander geschaltet werden können. Durch Messung des Winkels kann die Steuerung der Teilbreiten, insbesondere deren Ab- oder Anschaltung sehr exakt erfolgen, womit die landwirtschaftliche Arbeitsmaschine deutlich ökonomischer arbeiten kann. Der Begriff "Winkelsensor" wird im Folgenden als Sammelbegriff für alle denkbaren Vorrichtungen verwendet, die geeignet sind, die Winkel zwischen Zugfahrzeug und Gestänge direkt oder indirekt zu messen. Der Winkelsensor ist in diesem Sinne als eine allgemeine Winkelbestimmungseinrichtung zu verstehen. Zu diesen zählen auch, aber nicht nur, Gierratensensoren, indirekte Messverfahren mittels GPS-Sensoren, Inkrementalgeber, Servo-Potentiometer. Unter dem Begriff des Winkelsensors ist also jegliche Ausgestaltung zu verstehen, die eine direkt oder indirekte Messung des Winkels zwischen Zugfahrzeug und Gestänge ermöglicht.

Zudem umfasst die Arbeitsmaschine einen Positionssensor, der die Position des Zugfahrzeugs und/oder des Arbeitsgeräts messen kann, wobei die Teilbreiten in Abhängigkeit der Position unabhängig voneinander geschaltet werden können. Bei zusätzlicher Berücksichtigung der Position der landwirtschaftlichen Arbeitsmaschine kann nicht nur die Winkelstellung des Gestänges in Bezug auf die landwirtschaftliche Arbeitsmaschine sondern auch die relative Position der Arbeitsmaschine und/oder des Gestänges in Bezug auf ein zu bearbeitendes Feld berücksichtigt und die Teilbreiten entsprechend gesteuert werden.

In einer weiteren Ausführungsform ist vorgesehen, dass die Arbeitsmaschine eine Steuereinheit mit einem internen Speicher umfasst, in dem die Geometrie des Gestänges charakterisierende Daten abgespeichert werden können, wobei die Teilbreiten in Abhängigkeit dieser Daten unabhängig voneinander geschaltet werden können. So kann in vorteilhafter Weise für jedes Gerät eine individuelle Steuerung realisiert werden, was die Effektivität der landwirtschaftlichen Arbeitsmaschine weiter erhöht.

Es kann vorteilhaft sein, wenn eine Schaltung jeder Teilbreite zwischen einem aktiven und einem inaktiven Betriebszustand erfolgen kann.

In einer Weiterbildung der Arbeitsmaschine ist der Winkelsensor im Bereich der Verbindung angeordnet und kann den Winkel zwischen einer aktuellen Ausrichtung der Verbindung und einer Referenzausrichtung bestimmen. Das Vorsehen des Winkelsensors in dieser Position und damit einhergehende Messungen sind sehr zuverlässig.

Es lässt sich ein Verfahren zum Schalten von Teilbreiten eines Gestänges einer landwirtschaftlichen Arbeitsmaschine, das mit einem Zugfahrzeug der Arbeitsmaschine über eine Verbindung verbunden ist verwirklichen, das dadurch gekennzeichnet ist, dass ein Winkel zwischen dem Zugfahrzeug und dem Gestänge gemessen wird und die Teilbreiten in Abhängigkeit des gemessenen Winkels unabhängig voneinander geschaltet werden. Dieses Verfahren erlaubt eine ökonomische Arbeitsweise der landwirtschaftlichen Arbeitsmaschine. Zudem wird die Position des Zugfahrzeugs und/oder eines das Gestänge umfassenden Arbeitsgeräts gemessen und die Teilbreiten in Abhängigkeit der gemessenen Position unabhängig voneinander geschaltet. Hierdurch findet eine weitere Steigerung der Genauigkeit des Verfahrens statt.

In einer weiteren Ausführungsform der Erfindung ist das Verfahren dadurch gekennzeichnet, dass die Schaltung der Teilbreiten in Abhängigkeit von in einem internen Speicher einer Steuereinheit gespeicherten Daten, die charakteristisch für die Geometrie des Gestänges sind, erfolgt. Durch Berücksichtigung der Geometrie des Gestänges kann die Effektivität des Verfahrens mit Hinblick auf Ressourcensparsamkeit weiter erhöht werden.

Es kann ferner vorgesehen sein, dass die Schaltung jeder Teilbreite zwischen einem aktiven und einem inaktiven Betriebszustand erfolgt.

In einer Weiterbildung des Verfahrens erfolgt die Schaltung einer Teilbreite in einen inaktiven Betriebszustand erfolgt, wenn die Teilbreite sich in einem von der Arbeitsmaschine bereits behandelten Bereich befindet. So kann auszubringendes Material, wie beispielsweise Dünger oder Saatgut, eingespart werden.

Weiterhin ist vorgesehen, dass aus dem gemessenen Winkel ein Abstand jeder Teilbreite zu einer für den Fahrtweg der Arbeitsmaschine indikativen Kurve bestimmt und die Schaltung jeder Teilbreite in Abhängigkeit dieses Abstands erfolgt. In dieser Ausführungsform kann bei der Durchführung des Verfahrens auch die Winkelgeschwindigkeit der einzelnen Teilbreiten berücksichtigt werden und weiterhin erlaubt diese Ausführungsform die Berücksichtigung des tatsächlichen Abstands der Teilbreite zur Fahrtrichtung, womit auch die mehrfache Bearbeitung bereits bearbeiteter Flächen vermieden werden kann.

In einer Ausführungsform des Verfahrens erfolgt eine Steuerung einer ausgebrachten Materialmenge in Abhängigkeit des Winkels und einer gemessenen Geschwindigkeit der Arbeitsmaschine erfolgt. Da der Winkel in diesem Verfahren sehr genau bestimmt wird, kann auch die Winkelgeschwindigkeit sehr genau bestimmt werden, wodurch die ausgebrachte Materialmenge besser dosiert werden kann.
- Fig. 1: Schematische Darstellung einer erfindungsgemäßen landwirtschaftlichen Arbeitsmaschine.
- Fig. 2a+b: Schematische Darstellung eines Arbeitsablaufs.

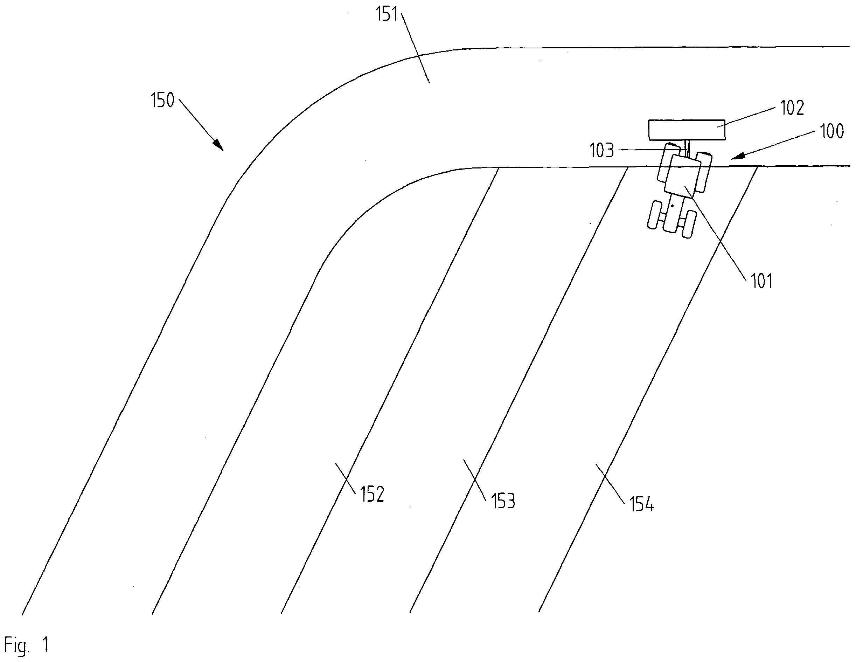

Fig. 1 zeigt eine erfindungsgemäße landwirtschaftliche Arbeitsmaschine 100, kurz Arbeitsmaschine 100, auf einem Feld 150. Bei der landwirtschaftlichen Arbeitsmaschine kann es sich um alle bekannten Formen der landwirtschaftlichen Arbeitsmaschinen handeln, insbesondere um Dünger- oder um Saatmaschinen oder Pflanzenschutzgeräte. Die Arbeitsmaschine 100 umfasst zu diesem Zweck ein Zugfahrzeug 101 und ein Arbeitsgerät 102, das ein Gestänge umfasst, welches mehrere Teilbreiten aufweist. Dieses Gestänge kann beispielsweise mehrere Düsengruppen umfassen, die in zumindest zwei unterschiedlichen Teilbreiten angeordnet sind. Das Arbeitsgerät 102 und das Zugfahrzeug 101 sind über eine Verbindung 103 miteinander verbunden. Um die Bewegung des Fahrzeugs möglichst flexibel zu gestalten, kann es sich hierbei um eine bewegliche Kupplung handeln.

Beim Bearbeiten des Feldes 150 fährt die Arbeitsmaschine 100 üblicherweise in Streifen 152-154 über das Feld, wobei ein kleiner Teilbereich 151 des Feldes vorgesehen sein kann, auf dem die Arbeitsmaschine 100 wenden kann (Vorgewende). So werden üblicherweise zwei nebeneinanderliegende Strecken 152 und 153 von der Arbeitsmaschine 100 in entgegengesetzter Richtung bearbeitet. Die Wende findet in Fig. 1 auf dem Vorgwende 151 von der Strecke 153 auf die Strecke 154 statt.

Die Arbeitsmaschine 100 verfügt über einen hier nicht dargestellten Winkelsensor, der einen Winkel *α* zwischen dem Zugfahrzeug und dem Gestänge des Arbeitsgeräts 102 ermitteln kann. Dieser Winkel kann prinzipiell auf beliebige Art und Weise gemessen werden, beispielsweise auch über Positionsvergleich des Gestänges und der Arbeitsmaschine. Weiterhin kann mittels Positionsdaten der Bewegungsverlauf von Gestänge und Zugfahrzeug genutzt werden, um aus der jeweiligen Bewegungsrichtung einen Winkel abzuleiten. Es ist jedoch bevorzugt, wenn der Winkelsensor so angeordnet und/oder ausgebildet ist, dass er eine Veränderung in der Ausrichtung der Verbindung 103 relativ zu einer Referenzausrichtung messen kann. Diese Referenzausrichtung kann beispielsweise die sein, bei der das Zugfahrzeug geradeaus fährt und das Gestänge dementsprechend direkt hinter ihm hinterhergezogen wird, so dass der Winkel, der von der Verbindung 103 und dem Richtungsvektor der Bewegung des Zugfahrzeugs eingeschlossen wird, null ist. Die Verbindung 103 und die Fahrtrichtung des Zugfahrzeugs laufen in diesem Fall also parallel. Fährt das Zugfahrzeug 101 eine Kurve, so kann sich aufgrund der beweglich gelagerten Verbindung 103 der Winkel zwischen aktueller Fahrtrichtung des Zugfahrzeugs 101 und der Verbindung 103, respektive dem Gestänge des Arbeitsgeräts 102 verändern. Dieser Winkel wird dann von dem Winkelsensor gemessen. Diese Messung kann mechanisch erfolgen und in ein digitales Signal umgewandelt werden, sie kann jedoch auch elektrisch, beispielsweise über eine Widerstandsmessung erfolgen und dann in ein digitales Signal umgewandelt werden.

Um zu verhindern, dass ein bereits bearbeiteter Teil des Feldes nochmals von dem Arbeitsgerät 102 bearbeitet wird, werden die Teilbreiten des Arbeitsgeräts 102 vorzugsweise unabhängig voneinander in Abhängigkeit des gemessenen Winkels geschaltet, z.B. wenn sich die Teilbreiten auf einen bearbeiteten Bereich zu bewegen oder bereits auf diesem sind.

Dabei kann in einer Ausführungsform vorgesehen sein, dass aus der momentanen Position der Arbeitsmaschine 100 und/oder dem Zugfahrzeug 101 und/oder dem Arbeitsgerät 102 sowie dem Winkel zwischen Zugfahrzeug und Gestänge bestimmt wird, ob zumindest eine Teilbreite des Gestänges des Arbeitsgeräts 102 sich in einem bereits bearbeiteten Bereich bewegt. In diesem Fall kann diese Teilbreite abgeschaltet werden, so dass beispielsweise kein Dünger oder Saatgut oder Pflanzenschutzmittel in dem bereits bearbeiteten Feldbereich ausgegeben wird. Ebenso kann vorgesehen sein, dass ermittelt wird, ob sich eine Teilbreite von einem bereits bearbeiteten Bereich des Feldes über einen nicht bearbeiteten Teil des Feldes bewegt und diese entsprechende Teilbreite eingeschaltet werden, so dass vorzugsweise ohne Verzögerung mit dem Ausbringen des entsprechenden Materials begonnen werden kann, sobald sich die Teilbreite in dem unbearbeiteten Bereich des Feldes befindet.

Vorzugsweise können hierzu auch entsprechende Totzeiten der einzelnen Geräte, wie beispielsweise Feldspritzen, des Arbeitsgeräts 102 berücksichtigt werden.

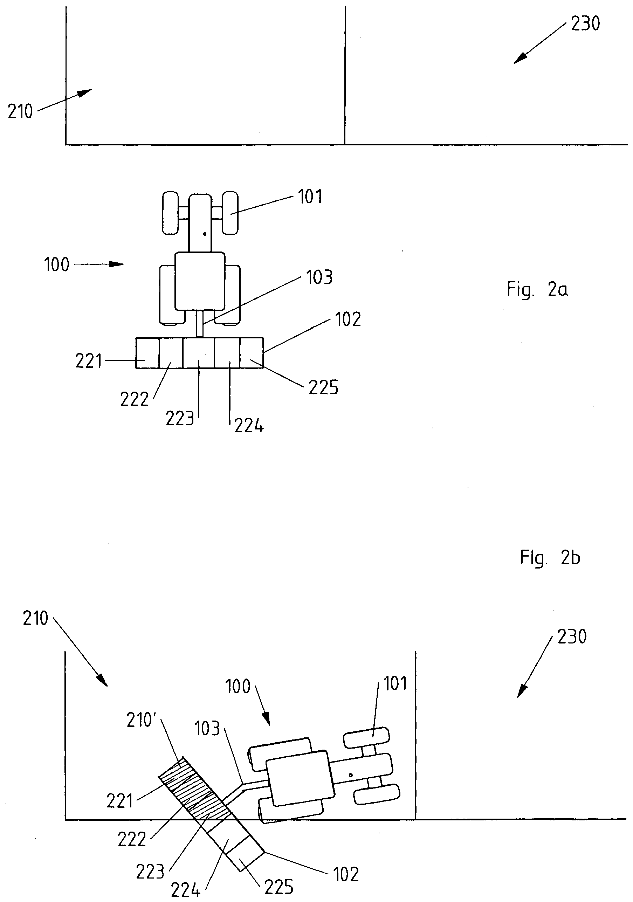

Fig. 2a+b zeigen den Ablauf der Bewegung einer landwirtschaftlichen Arbeitsmaschine 100 und die damit verbundene Steuerung der Teilbreiten des Arbeitsgeräts. In Fig. 2a bewegt sich das Zugfahrzeug 101 mit dem Arbeitsgerät 102, das mit ersterem über die Verbindung 103 verbunden ist, auf einen bereits bearbeiteten Bereich 210 des beispielsweise in Fig. 1 dargestellten Feldes zu, über den es fahren muss um auf den nächsten unbearbeiteten Bereich 230 aufzufahren. Die Teilbreiten 221-225 des Arbeitsgeräts 102 sind im in Fig. 2a dargestellten Fall eingeschaltet. So bringen sie zu diesem Zeitpunkt beispielsweise Düngemittel, Saatgut, Pflanzenschutzmittel oder andere Materialien aus. Da der Boden, der noch vor dem Arbeitsgerät 102 in Bewegungsrichtung liegt, noch unbearbeitet ist (bis zum Erreichen des bearbeiteten Bereichs 210), können alle Teilbreiten 221 und 225 arbeiten.

In Fig. 2b fährt die Arbeitsmaschine 100 nun auf den bearbeiteten Teil 210 des Feldes. Grundsätzlich ist es hier zweckmäßig, wenn das Arbeitsgerät 102 den bereits bearbeiteten Teil 210 des Feldes nicht mehr bearbeitet. Andererseits befindet sich ein Teil des Arbeitsgerät, wie hier über die Schraffur 210' angedeutet, bereits in dem bearbeiteten Teil 210 des Feldes, wohingegen sich der andere Teil des Arbeitsgeräts 102, der nicht schraffiert dargestellt ist, noch nicht über dem bearbeiteten Bereich 210 des Feldes befindet.

Der in der Arbeitsmaschine 100 vorgesehene Winkelsensor bestimmt daher vorzugsweise in Echtzeit den Winkel *α* , den die Arbeitsmaschine bzw. das Gestänge mit dem Zugfahrzeug einschließt. Der Einfachheit halber ist hier die Verbindung 103 als starr mit dem Zugfahrzeug 101 verbunden gezeichnet, so dass in der Abbildung 2b der Winkel *α* zwischen der Verbindung 103 und dem Gestänge des Arbeitsgeräts 102 bestimmt wird. Wie mit Bezug auf Fig. 1 beschrieben, kann der Winkel auch anders bestimmt werden, beispielsweise durch Bestimmung der Lageveränderung der Verbindung 103 selbst in Bezug auf eine Referenzausrichtung.

Auf Grundlage des bestimmten Winkels *α* kann beispielsweise durch eine entsprechende Steuereinheit, die in der Arbeitsmaschine 100 vorgesehen ist, zu jeder Zeit bestimmt werden, wie das Arbeitsgerät 102 relativ zum Zugfahrzeug 101 ausgerichtet ist. So kann die Steuereinheit ermitteln, welche Teilebreiten 221-225 noch auf dem unbearbeiteten Teil des Feldes sind und welche bereits im bearbeiteten Teil 210 des Feldes sind. In der in Fig. 2b dargestellten Situation sind die Teilbreiten 221 und 222 bereits deutlich im bearbeiteten Bereich 210 des Feldes, wohingegen die übrigen Teilbreiten 223-225 sich noch in dem unbearbeiteten Teil des Feldes befinden. Da die Anzahl von Teilbreiten, die sich bei einem gegebenen Winkel *α* in der in Fig. 2b dargestellten Situation bereits im bearbeiteten Teil 210 des Feldes befinden, stark von der Länge des Gestänges des Arbeitsgeräts 102 abhängig ist, kann vorgesehen sein, dass bei der Berechnung auch die Gesamtlänge des Gestänges und eventuell auch die spezielle Position oder Einteilung der Teilbreiten entlang dieser Länge berücksichtigt wird.

Erfindungsgemäß werden auf Grundlage des berechneten Winkels *α* und gegebenenfalls unter Berücksichtigung anderer geometrischer Eigenschaften der Arbeitsmaschine und eventuell der Verbindung, wie beispielsweise Länge der Verbindung oder Gesamtlänge des Gestänges, einzelne Teilbreiten abgeschaltet. In dem in Fig. 2b dargestellten Fall werden also die Teilbreiten 221 und 222 abgeschaltet, da diese sich deutlich im bearbeiteten Bereich 210 des Feldes befinden.

Die Entscheidung darüber, ab wann eine Teilbreite 221-225 abgeschaltet wird, kann zusätzlich von weiteren Kriterien abhängen. So kann es vom ökonomischen Standpunkt aus sinnvoll sein, die Teilbreiten so lange angeschaltet zu lassen, bis der Überlapp der Teilbreite mit dem bearbeiteten Bereich wenigstens 50 % oder 60 % oder 80 % oder 90 % beträgt, um sicherzustellen, dass der unbearbeitete Teil des Feldes möglichst vollständig bearbeitet wird. Beispielsweise kann so für eine ausreichende Düngung des gesamten Feldes gesorgt werden oder der Platz möglichst effektiv für das Ausbringen von Saatgut genutzt werden. Andererseits kann es vorteilhaft sein, wenn möglichst keine mehrfache Bearbeitung eines bereits bearbeiteten Bereichs des Feldes erfolgt. Insbesondere sollte eine übermäßige Auftragung von Pflanzenschutzmitteln vermieden werden. In diesem Fall kann die Teilbreitenabschaltung bei Überlapp mit dem bearbeiteten Bereich 210 des Feldes bereits erfolgen, wenn nur 10 % der Teilbreite oder 20 % oder 40 % mit dem bearbeiteten Bereich 210 des Feldes überlappen. Überdüngung oder übermäßige Aufbringung von Pflanzenschutzmitteln kann so verhindert werden.

Die Schaltung der Teilbreiten 221-225 erfolgt vorzugsweise völlig unabhängig voneinander, so dass beispielsweise in der in Fig. 2b dargestellten Situation zunächst die Teilbreiten 221 und 222 abgeschaltet werden, als nächstes die Teilbreite 223 und danach, falls nötig, die Teilbreiten 224 und 225.

Zwar wurde der Verlauf der Abschaltung der Teilbreiten 221-225 in Fig. 2a-b beim Auffahren auf einen bearbeiteten Bereich 210 eines Feldes beschrieben. Die erfindungsgemäße Winkelmessung und daraus resultierende Steuerung der Teilbreiten 221-225 kann jedoch, wie bereits mit Bezug auf Fig. 1 erwähnt, auch auf das Einschalten der Teilbreiten angewendet werden. Es sei daher erwähnt, dass, falls der Bereich 210 der in Fig. 2a+b dargestellten Situation ein unbearbeiteter Bereich ist, die Teilbreiten 221 und 222, die sich auf den unbearbeiteten Bereich zu bewegen, bereits eingeschaltet werden können. Danach können sukzessive die Teilbreiten 223-225 unabhängig voneinander eingeschaltet werden. Auch hier können bestimmte zusätzliche Kriterien, wie geometrische Eigenschaften der Verbindung von Zugfahrzeug 101 und Arbeitsgerät 102 berücksichtigt werden sowie bestimmte Kriterien hinsichtlich der ökonomischen Bearbeitung des Feldes.

Vorzugsweise ist in einer entsprechenden Steuereinheit, die die Steuerung der Teilbreiten übernehmen kann und die Auswertung der Winkelmessung des Winkelsensors, weiterhin ein interner Speicher vorgesehen, der zusätzliche Informationen, wie die geometrischen Informationen der landwirtschaftlichen Arbeitsmaschine aber auch beispielsweise geografische Informationen über das Feld und die geplanten Wege, wie sie in Fig. 1 dargestellt sind, enthält. Ist zusätzlich zum Winkelsensor auch ein Positionssensor in der Arbeitsmaschine vorgesehen, beispielsweise ein GPS-Sensor, so kann unter Berücksichtigung der aktuellen Position, aber auch des vergangenen Bewegungsablaufs, die Schaltung der Teilbreiten gesteuert werden.

Zu diesem Zweck ist vorgesehen, dass mit Hilfe des Positionssensors eine für den Fahrtweg der Arbeitsmaschine indikative Kurve erstellt wird, die mit fortschreitender Arbeit der Arbeitsmaschine sich über das gesamte Feld erstreckt. Diese Kurve muss nicht mit dem Mittelpunkt des Fahrzeugs zusammenfallen, dies kann jedoch weitere Berechnungen vereinfachen. Es ist dann vorgesehen, dass der Abstand der einzelnen Teilbreiten zu dieser Kurve auf Grundlage des gemessenen Winkels, wie beispielsweise in Fig. 2a und Fig. 2b dargestellt, bestimmt wird, um so indirekt oder direkt die Lage der einzelnen Teilbreiten zu bereits bearbeiteten Bereichen des Feldes bestimmen zu können. Da es Ausführungen der Verbindung 103 zwischen Zugfahrzeug 101 und Arbeitsgerät 102 gibt, bei der das Arbeitsgerät nicht spurgetreu der Bewegung des Zugfahrzeugs folgt, kann sich der Abstand einzelner Teilbreiten zu der beschriebenen Kurve verändern, so dass eine Abschaltung oder Einschaltung der Teilbreiten basierend auf dem Abstand zum nächsten unbearbeiteten oder bearbeiteten Bereich des Feldes verändern kann. Dem kann durch die Bestimmung des Abstands zu der beschriebenen Kurve des Zugfahrzeugs auf dem Feld Rechnung getragen werden, so dass auch für solche Verbindungen eine vollständige Bearbeitung oder möglichst vollständige Bearbeitung des Feldes sichergestellt werden kann, indem eine winkelabhängige Steuerung der Teilbreiten gegebenenfalls unter Berücksichtigung weiterer Kriterien erfolgt.

Bei Vorsehen eines Positionssensors, wie eines GPS-Sensors, ergibt sich auch die Möglichkeit, die Geschwindigkeit des Zugfahrzeugs und damit die translatorische Geschwindigkeit des Arbeitsgeräts 102 zu bestimmen. Durchfährt das Zugfahrzeug eine Kurve, so ergibt sich für einzelne Teilbreiten des Gestänges des Arbeitsgeräts 102 jedoch eine unterschiedliche translatorische Geschwindigkeit beim Durchfahren dieser Kurve, da die Winkelgeschwindigkeit der einzelnen Teilbreiten zwar gleich ist, der Abstand zum Drehpunkt allerdings unterschiedlich groß ist. Die Schaltung der Teilbreiten basierend auf dem gemessenen Winkel zwischen der Arbeitsmaschine und dem Arbeitsgerät kann hier in vorteilhafter Weise genutzt werden, um diese Geschwindigkeit zu bestimmen. Auf Grundlage dieser Geschwindigkeit kann dann eine Steuerung der von den einzelnen Teilbreiten abgegebenen Materialmenge, wie beispielsweise Dünger oder Saatgut oder Pflanzenschutzmittel, durchgeführt werden, so dass es zwar nicht zu einer Abschaltung oder Einschaltung von Teilbereichen kommt sondern während dieses Prozesses eine Einstellung der Betriebsparameter der einzelnen Teilbreiten basierend auf der momentanen Geschwindigkeit dieser Teilbreite erfolgt. So kann sichergestellt werden, dass stets die gewünschte Menge an Saatgut oder Dünger oder Pflanzenschutzmittel oder anderer Materialien auf dem Feld ausgegeben wird. Hierbei kann die Genauigkeit durch die in Echtzeit erfolgende Messung des Winkels zwischen Arbeitsgerät und Zugfahrzeug mittels des Winkelsensors erheblich gesteigert werden.

## Patentansprüche

1. Landwirtschaftliche Arbeitsmaschine (100) umfassend ein Zugfahrzeug (101) und ein Arbeitsgerät (102), die miteinander über eine Verbindung (103) verbunden sind, wobei das Arbeitsgerät (102) ein Gestänge aufweist, das wenigstens zwei schaltbare Teilbreiten (221-225) umfasst, **dadurch gekennzeichnet, dass** die Arbeitsmaschine (100) einen Winkelsensor umfasst, der den Winkel zwischen dem Zugfahrzeug (101) und dem Gestänge messen kann und dass die Teilbreiten (221-225) in Abhängigkeit des gemessenen Winkels unabhängig voneinander geschaltet werden können, wobei die Arbeitsmaschine zudem einen Positionssensor umfasst, der die Position des Zugfahrzeugs (101) und/oder des Arbeitsgeräts (102) messen kann, wobei die Teilbreiten (221-225) in Abhängigkeit der Position unabhängig voneinander geschaltet werden können, und
wobei aus dem gemessenen Winkel ein Abstand jeder Teilbreite (221-225) zu einer für den Fahrtweg der Arbeitsmaschine (100) indikativen Kurve bestimmt und die Schaltung jeder Teilbreite (221-225) in Abhängigkeit dieses Abstands erfolgt.

2. Arbeitsmaschine (100) nach Anspruch 1, **dadurch gekennzeichnet, dass** die Arbeitsmaschine (100) eine Steuereinheit mit einem internen Speicher umfasst, in dem die Geometrie des Gestänges charakterisierende Daten abgespeichert werden können, wobei die Teilbreiten (221-225) in Abhängigkeit dieser Daten unabhängig voneinander geschaltet werden können.

3. Arbeitsmaschine nach einem der Ansprüche 1 oder 2, **dadurch gekennzeichnet, dass** eine Schaltung jeder Teilbreite (221-225) zwischen einem aktiven und einem inaktiven Betriebszustand erfolgen kann.

4. Arbeitsmaschine nach einem der Ansprüche 1 bis 3, **dadurch gekennzeichnet, dass** der Winkelsensor im Bereich der Verbindung (103) angeordnet ist und den Winkel zwischen einer aktuellen Ausrichtung der Verbindung (103) und einer Referenzausrichtung bestimmen kann.

5. Verfahren zum Schalten von Teilbreiten (221-225) eines Gestänges einer landwirtschaftlichen Arbeitsmaschine (100), das mit einem Zugfahrzeug (101) der Arbeitsmaschine (100) über eine Verbindung verbunden ist,
**dadurch gekennzeichnet, dass**
ein Winkel zwischen dem Zugfahrzeug (100) und dem Gestänge gemessen wird und die Teilbreiten (221-225) in Abhängigkeit des gemessenen Winkels unabhängig voneinander geschaltet werden, wobei die Position des Zugfahrzeugs (101) und/oder eines das Gestänge umfassenden Arbeitsgeräts (102) gemessen wird und die Teilbreiten (221-225) in Abhängigkeit der gemessenen Position unabhängig voneinander geschaltet werden, und
aus dem gemessenen Winkel ein Abstand jeder Teilbreite (221-225) zu einer für den Fahrtweg der Arbeitsmaschine (100) indikativen Kurve bestimmt und die Schaltung jeder Teilbreite (221-225) in Abhängigkeit dieses Abstands erfolgt.

6. Verfahren nach Anspruch 5, **dadurch gekennzeichnet, dass** die Schaltung der Teilbreiten (221-225) in Abhängigkeit von in einem internen Speicher einer Steuereinheit gespeicherten Daten, die charakteristisch für die Geometrie des Gestänges sind, erfolgt.

7. Verfahren nach einem der Ansprüche 5 oder 6, **dadurch gekennzeichnet, dass** die Schaltung jeder Teilbreite (221-225) zwischen einem aktiven und einem inaktiven Betriebszustand erfolgt.

8. Verfahren nach Anspruch 7, **dadurch gekennzeichnet, dass** die Schaltung einer Teilbreite (221-225) in einen inaktiven Betriebszustand erfolgt, wenn die Teilbreite (221-225) sich in einem von der Arbeitsmaschine (100) bereits behandelten Bereich (210) befindet.

9. Verfahren nach Anspruch 5, **dadurch gekennzeichnet, dass** die Winkelgeschwindigkeit der einzelnen Teilbreiten berücksichtigt werden.

10. Verfahren nach einem der Ansprüche 5 bis 9, **dadurch gekennzeichnet, dass** eine Steuerung einer ausgebrachten Materialmenge in Abhängigkeit des Winkels und einer gemessenen Geschwindigkeit der Arbeitsmaschine (100) erfolgt.

## Claims

1. Agricultural machine (100) comprising a towing vehicle (101) and a working implement (102) which are connected to one another via a connector (103), the working implement (102) having a linkage which has at least two switchable partial-width portions (221-225), **characterised in that** the machine (100) comprises an angle sensor which can measure the angle between the towing vehicle (101) and the linkage and **in that** the partial-width portions (221-225) can be switched independently of one another depending on the measured angle, the machine also comprising a position sensor which can measure the position of the towing vehicle (101) and/or of the working implement (102), it being possible to switch the partial-width portions (221-225) independently of one another on the basis of the position.

2. Machine (100) according to claim 1, **characterised in that** the machine (100) comprises a control unit having an internal memory in which the data characterising the geometry of the linkage can be stored, it being possible to switch the partial-width portions (221-225) independently of each other on the basis of this data.

3. Machine according to any of claims 1 to 2, **characterised in that** each partial-width portion (221-225) can be switched between an active and an inactive operating state.

4. Machine according to any of claims 1 to 3, **characterised in that** the angle sensor is arranged in the region of the connector (103) and can determine the angle between a current orientation of the connector (103) and a reference orientation.

5. Method for switching partial-width portions (221-225) of a linkage of an agricultural machine (100), which linkage is connected to a towing vehicle (101) of the machine (100) via a connector, **characterised in that** an angle between the towing vehicle (100) and the linkage is measured and the partial-width portions (221-225) are switched independently of one another on the basis of the measured angle, the position of the towing vehicle (101) and/or of a working implement (102) that comprises the linkage being measured and the partial-width portions (221-225) being switched independently of one another on the basis of the measured position.

6. Method according to claim 5, **characterised in that** the partial-width portions (221-225) are switched on the basis of data which are stored in an internal memory of a control unit and are characteristic of the geometry of the linkage.

7. Method according to any of claims 5 to 6, **characterised in that** each partial-width portion (221-225) is switched between an active and an inactive operating state.

8. Method according to claim 7, **characterised in that** a partial-width portion (221-225) is switched into an inactive operating state when the partial-width portion (221-225) is in a region (210) which has already been treated by the machine (100).

9. Method according to claim 5, **characterised in that** the angular velocity of the individual partial-width portions is taken into account.

10. Method according to any of claims 5 to 9, **characterised in that** an applied amount of material is controlled on the basis of the angle and a measured speed of the machine (100).

## Revendications

1. Machine de travail agricole (100), comprenant un véhicule tracteur (101) et un appareil de travail (102) qui sont reliés entre eux par le biais d'une liaison (103), où l'appareil de travail (102) possède une tringlerie qui comprend au moins deux largeurs partielles (221-225) commutables, **caractérisée en ce que** la machine de travail (100) comprend un capteur angulaire qui peut mesurer l'angle entre le véhicule tracteur (101) et la tringlerie et **en ce que** les largeurs partielles (221-225) peuvent être commutées indépendamment les unes des autres en fonction de l'angle mesuré, où la machine de travail comprend en outre un détecteur de position qui peut mesurer la position du véhicule tracteur (101) et/ou de l'appareil de travail (102), où les largeurs partielles (221-225) peuvent être commutées indépendamment les unes des autres en fonction de la position, et
où un écart de chaque largeur partielle (221-225) par rapport à une courbe indicative de la trajectoire de déplacement de la machine de travail (100) est déterminé à partir de l'angle mesuré et la commutation de chaque largeur partielle (221-225) est effectuée en fonction de cet écart.

2. Machine de travail (100) selon la revendication 1, **caractérisée en ce que** la machine de travail (100) comprend une unité de commande dotée d'une mémoire interne dans laquelle peuvent être enregistrées des données qui caractérisent la géométrie de la tringlerie, où les largeurs partielles (221-225) peuvent être commutées indépendamment les unes des autres en fonction de ces données.

3. Machine de travail selon l'une des revendications 1 ou 2, **caractérisée en ce qu'**une commutation de chaque largeur partielle (221-225) peut être effectuée entre un état opérationnel actif et un état opérationnel inactif.

4. Machine de travail selon l'une des revendications 1 à 3, **caractérisée en ce que** le capteur angulaire est disposé dans la zone de la liaison (103) et peut déterminer l'angle entre une orientation actuelle de la liaison (103) et une orientation de référence.

5. Procédé pour commuter les largeurs partielles (221-225) d'une tringlerie d'une machine de travail (100) agricole, laquelle est reliée à un véhicule tracteur (101) de la machine de travail (100) par le biais d'une liaison,
**caractérisé en ce qu'**
un angle entre le véhicule tracteur (100) et la tringlerie est mesuré et les largeurs partielles (221-225) sont commutées indépendamment les unes des autres en fonction de l'angle mesuré, où la position du véhicule tracteur (101) et/ou d'un appareil de travail (102) comprenant la tringlerie est mesurée et les largeurs partielles (221-225) sont commutées indépendamment les unes des autres en fonction de la position mesurée, et
un écart de chaque largeur partielle (221-225) par rapport à une courbe indicative de la trajectoire de déplacement de la machine de travail (100) est déterminé à partir de l'angle mesuré et la commutation de chaque largeur partielle (221-225) est effectuée en fonction de cet écart.

6. Procédé selon la revendication 5, **caractérisé en ce que** la commutation des largeurs partielles (221-225) est effectuée en fonction de données enregistrées dans une mémoire interne d'une unité de commande, lesquelles sont caractéristiques de la géométrie de la tringlerie.

7. Procédé selon la revendication 5 ou 6, **caractérisé en ce que** la commutation de chaque largeur partielle (221-225) est effectuée entre un état opérationnel actif et un état opérationnel inactif.

8. Procédé selon la revendication 7, **caractérisé en ce que** la commutation d'une largeur partielle (221-225) dans un état opérationnel inactif est effectuée lorsque la largeur partielle (221-225) se trouve dans une zone (210) déjà traitée par la machine de travail (100).

9. Procédé selon la revendication 5, **caractérisé en ce que** la vitesse angulaire des largeurs partielles individuelles sont prises en compte.

10. Procédé selon l'une des revendications 5 à 9, **caractérisé en ce qu'**une commande d'une quantité de produit épandue est effectuée en fonction de l'angle et d'une vitesse mesurée de la machine de travail (100).
